# EUROPEAN PATENT SPECIFICATION

(11) **EP 2 986 862 B1**
(45) Date of publication and mention of the grant of the patent: **01.03.2017**
(21) Application number: 13720281.8
(22) Date of filing: 15.04.2013
(51) Int. Cl.: F16C 23/04, F16C 25/04, F16C 33/04, F16C 11/06

(54) **SPHERICAL PLAIN BEARING WITH SPRING-BALL CONFIGURATION**
SPHÄRISCHES GLEITLAGER MIT FEDERNDER KUGEL
PALIER LISSE SPHÉRIQUE AVEC BILLE ÉLASTIQUE

(43) Date of publication of application: 24.02.2016
(73) Proprietor: Schaublin SA, 2800 Delemont (CH)
(72) Inventor: CHARMILLOT, Philippe, CH-2832 Rebeuvelier (CH)
(74) Representative: Regimbeau
(86) International application number: PCT/EP2013/057813
(87) International publication number: WO 2014/169942

(56) References cited:
- WO-A1-2013/000517
- FR-A- 1 231 590
- US-A1- 2007 274 618

## Description

### Technical Field

The present invention is directed to a spherical plain bearing having a spring-ball configuration and contacting surfaces. The contacting surfaces engage and move relative to each other while exerting substantially constant torque values. Such a spherical plain bearing with constant torque is known from WO 2013/000517 A1.

### Background

Spherical plain bearings have traditionally been comprised of a ball positioned for rotational movement in an outer race. The outer race defines an inner surface contoured to receive and retain the ball therein. In cases in which the ball and the outer race are each metallic, a lubricant may be provided between the rounded outer surface of the ball and the inner concave surface of the outer race to allow the bearing to be operable for extended periods of time. In other cases, the contacting surfaces of the ball and the outer race may comprise dissimilar materials, one of which may be inherently lubricous.

### Summary

The present invention resides in a spherical plain bearing assembly comprising a flexible ball comprising a radial spring ball, the flexible ball having a spherical outer surface, an annular inner surface, a first diameter, and a bore extending therethrough. The inner surface defines a slot therein extending radially outwardly. The flexible ball defines a slit extending axially therethrough such that the flexible ball is resiliently expandable in a radial direction defining a second diameter which is greater than the first diameter. The flexible ball further defines at least one first aperture extending radially therethrough. The spherical plain bearing assembly further comprises an outer race having an inner engagement surface contoured to a shape complementary to the spherical outer surface of the flexible ball. The flexible ball is positioned within the outer race such that the spherical outer surface of the flexible ball slidably and rotatably engages the inner engagement surface of the outer race. Upon sliding, rotating or tilting motion of the spherical outer surface of the flexible ball relative to the inner engagement surface of the outer race, a substantially constant torque is maintained in the spherical plain bearing. A shaft has an outer surface defining a ridge extending radially outwardly that is received within the slot in the inner surface of the flexible ball. The shaft further defines at least one second aperture extending at least partway radially inwardly from the outer surface of the shaft. The shaft extends through the bore of the flexible ball and is fixedly secured to the flexible ball to prevent axial sliding and rotating motion of the inner surface of the flexible ball relative to the outer surface of the shaft. A pin is respectively received in the at least one first aperture and the at least one second aperture to maintain the position of the flexible ball in relation to the shaft extending therethrough.

In any of the bearings described herein, the geometry of the ball can variably expand during use of the bearing to maintain a substantially constant pressure on the inner engagement surface of the outer member or outer race. In maintaining the pressure substantially constant, substantially constant torque can be maintained during operation of the spherical plain bearing.

### Brief Description of the Figures

FIG. 1 is a cross-sectional side view of one embodiment of a spherical plain bearing.
FIG. 2 is an end view of the bearing of FIG. 1.
FIG. 3 is a perspective view of one embodiment of a ball of a spherical plain bearing.
FIG. 4 is a perspective view of a shaft inserted through the ball of FIG. 3.
FIG. 5 is a perspective view of another embodiment of a spherical plain bearing.
FIG. 6 is a sectional view of yet another embodiment of a ball of a spherical plain bearing wherein a slot and ridge are positioned to one side of the ball.
FIG. 7 is a perspective view of a section of an embodiment of a ball of a spherical plain bearing of the present invention wherein a slot and ridge are positioned at the center of the ball.
FIG. 8 is an exploded perspective view of the spherical plain bearing of FIG. 7.
FIG. 9 is a graphical representation of the change in moving torque of the bearing of FIG. 1 compared to a typical spherical plain bearing.

### Detailed Description

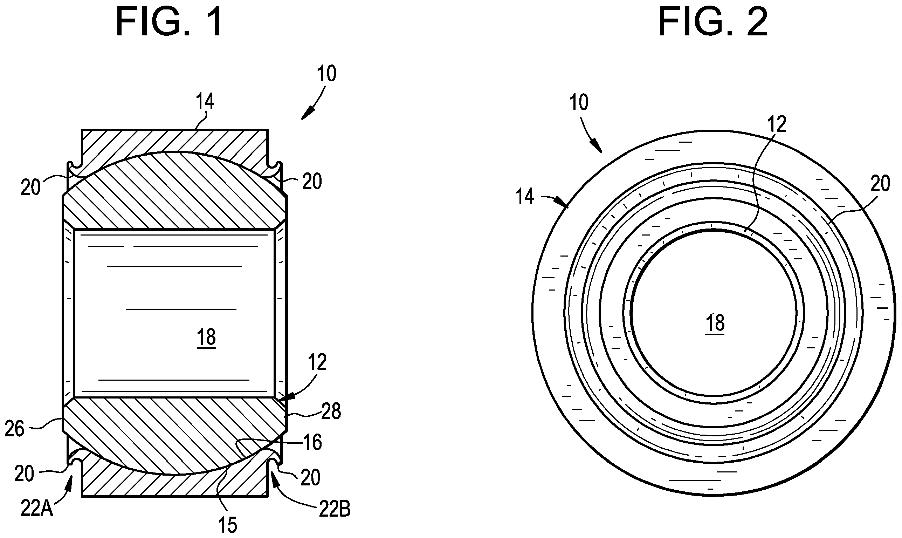

As shown in FIGS. 1 and 2, one embodiment of a spherical plain bearing is generally designated by the reference number 10 and is hereinafter referred to as "bearing 10." Bearing 10 allows constant torque to be maintained upon operation of the bearing, particularly upon sliding, rotating or tilting motion of a spherical outer surface of an inner member relative to an inner engagement surface of an outer member as further described below.

Bearing 10 includes an inner member or a ball 12 positioned in an outer member or an outer race 14. The outer race 14 is a ring that defines an inner engagement surface 16 contoured to a shape complementary to an outer surface 15 of the ball 12. The outer race 14 may include a lip 20 extending circumferentially therearound at a first edge 22A and a second edge 22B in which a seal boot may be located as disclosed below.

During operation, the outer surface 15 of the ball 12 engages the inner engagement surface 16 of the outer race 14. The ball 12 defines a bore 18 extending therethrough and adapted to receive a portion of a shaft therein. Suitable materials from which the ball 12 and the outer race 14 can be fabricated include, but are not limited to, steel, steel alloys, aluminum, aluminum alloys, magnesium, magnesium alloys, and the like. While the bore 18 has been shown and described as extending through the ball 12, it can, however, also extend only partway through the ball.

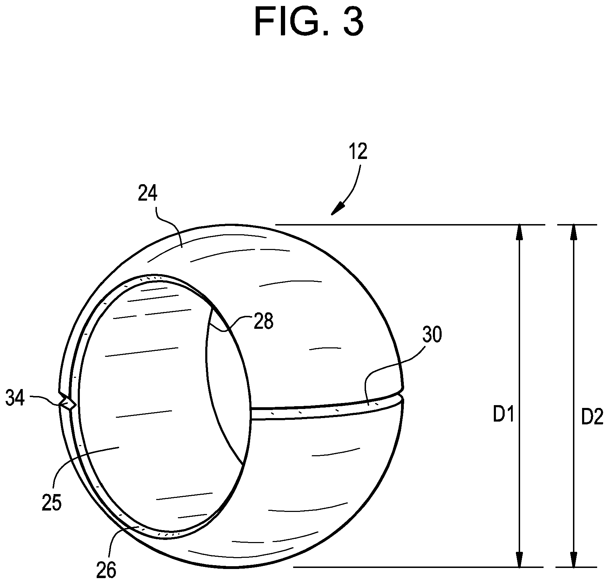

As is shown in FIG. 3, one embodiment of the ball 12 is defined by a cylindrical member having a spherical outer surface 24, an annular inner surface 25, and a first axial face 26 and a second axial face 28. The bore 18 extends through the inner surface 25 and each axial face 26 and 28. A slit 30 extends through the axial length of the ball 12 and allows the ball 12 to be flexible and to resiliently expand in a radial direction. Thus, because the ball 12 is resilient and can expand and subsequently return to its original configuration, the ball is of a variable geometry. More specifically, an outer diameter or a first diameter D1 of the ball 12 can vary as a function of the degree of expansion. For example, the slit 30 provides for the resilient radial expansion of the first diameter D1 of the ball 12 to an outer diameter or a second diameter D2 of the ball 12 where D2 is greater than D1. The ball 12 may be resiliently expanded by mechanical or other suitable means.

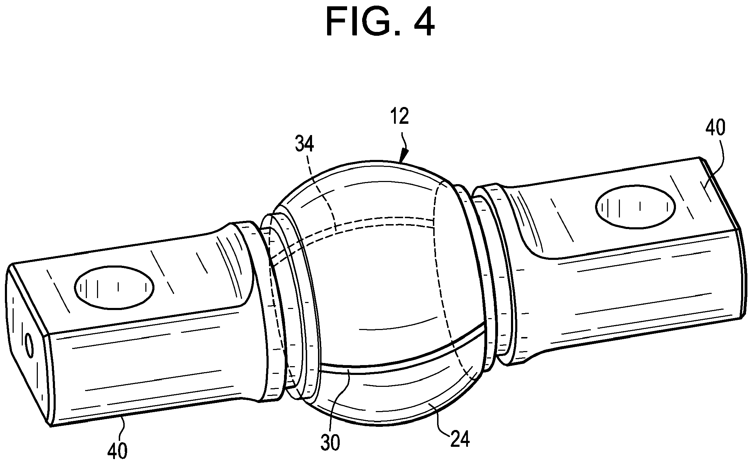

As is shown in FIGS. 3 and 4, at least one anchoring point 34 is defined on at least one of the first or second axial face, 26 or 28, wherein the anchoring point 34 is positioned generally diametrically opposite the slit 30. The anchoring point(s) 34 define points at which the ball 12 can be welded or otherwise attached to a shaft 40 (FIG. 4) extending therethrough. Attachment of the ball 12 at one of the anchoring points 34 insures that axial sliding motion does not occur between the ball 12 and the shaft 40. The ball must not only be attached to a shaft, however, as any suitable element may be received within the bore 18 of the ball 12. In addition, the ball 12 may be axially constrained with respect to the shaft 40 either tightly or loosely. Moreover, the ball 12 may be mounted on the shaft 40 with rotational constraint or without rotational constraint thereby allowing the ball 12 and the shaft 40 to have relative rotational movement therebetween.

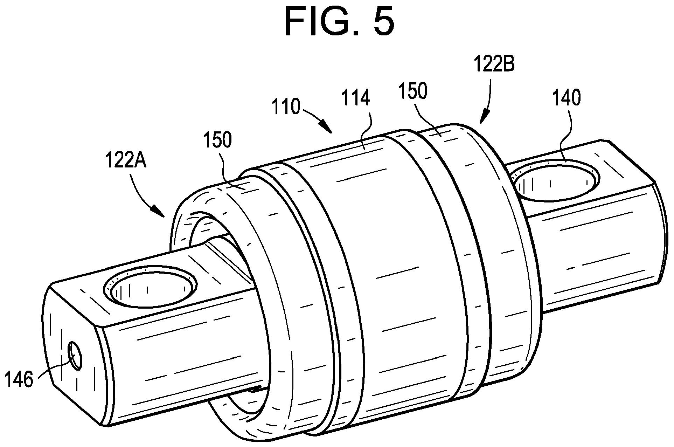

As shown in FIG. 5, one embodiment of a spherical plain bearing located on a shaft is generally designated by the reference number 100 and is hereinafter referred to as "bearing assembly 100." Bearing assembly 100 comprises a shaft 140 extending through a bearing 110 which in turn comprises an outer race 114 positioned on a ball 112 (not shown). Upon installation of the outer race 114 on the ball 112, an optional seal boot 150 may be attached to the outer race 114 and the shaft 140 at one or both of a first edge 122A and a second edge 122B of the outer race 114. A locating, centering, or mounting indentation 146 may be located at one or both ends of the shaft 140 and extending axially inwardly therein for fabrication purposes.

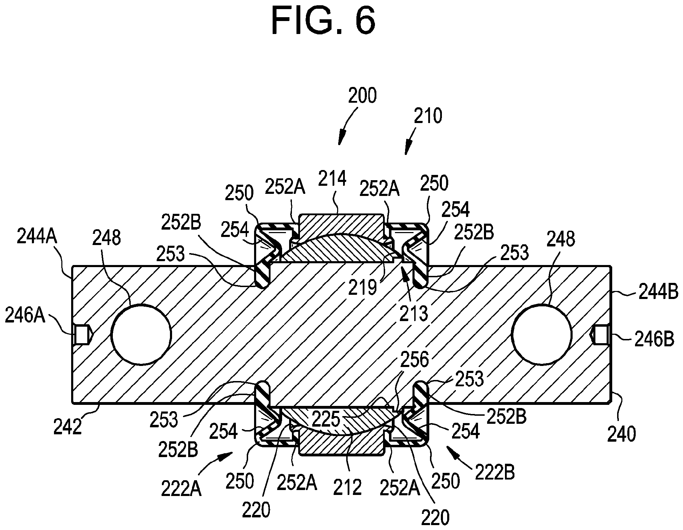

As shown in FIG. 6, another embodiment of a spherical plain bearing located on a shaft is generally designated by the reference number 200 and is hereinafter referred to as "bearing assembly 200." Bearing assembly 200 comprises a shaft 240 extending through a bearing 210 which in turn comprises an outer race 214 positioned on a ball 212. Upon installation of the outer race 214 on the ball 212, an optional seal boot 250 may be attached to the outer race 214 and the shaft 240 at one or both of a first edge 222A and a second edge 222B of the outer race 214. As further shown in FIG. 6, each seal boot 250 includes a first edge defining a first ridge 252A, the first ridge 252A being configured to engage a lip 220 extending circumferentially around the first and second edge 222A and 222B of the outer race 214. Each seal boot 250 also includes a second edge defining a second ridge 252B movable relative to the first ridge 252A via compression of a spring portion 254 of the seal boot 250. Compression of the spring portion 254 allows the second ridge 252B to be "stretched" over the shaft 240 and "snapped" into at least one groove 253 extending around an outer surface 242 of the shaft 240, thereby sealing the outer race 214 to the shaft 240.

An annular inner surface 225 of ball 212 may define a channel or slot 219 extending radially outwardly from the annular inner surface 225 at one end 213 of the ball 212. The slot 219 receives a corresponding ridge 256 extending radially outwardly from the outer surface 242 of the shaft 240. Engagement of the ridge 256 of the shaft 240 and the slot 219 of the ball 212 provides another embodiment for insuring that axial sliding motion does not occur between the ball 212 and the shaft 240. While the slot 219 is shown and described as being located at one end 213 of the ball 212, it may, however, also be located at any point on the annular inner surface 225 of the ball 212 that engages the outer surface 242 of the shaft 240, and a corresponding ridge 256 defined therein. While the slot 219 is shown and described as extending radially outwardly from the annular inner surface 225 of the ball 212, and the ridge 256 is shown and described as extending radially outwardly from the outer surface 242 of the shaft 240, it may, however, also extend radially inwardly from the outer surface 242 of the shaft 240 and the corresponding ridge 256 may extend radially inwardly from the annular inner surface 225 of the ball 212.

In the embodiment shown in FIG. 6, the shaft 240 further defines a third axial face 244A and a fourth axial face 244B, each of which respectively define a locating, centering, or mounting indentation 246A and 246 B extending axially inwardly therein for fabrication purposes. The shaft 240 further defines apertures 248 extending radially therethrough at each end of the shaft 240 and positioned axially outwardly of the groove 253 extending around the outer surface 242 of the shaft 240. While the shaft 240 has been shown and described as defining locating, centering, or mounting indentations 246A and 246 B, and radial apertures 248, it can, however, also define a variety of configurations for engaging a component of an upper level assembly.

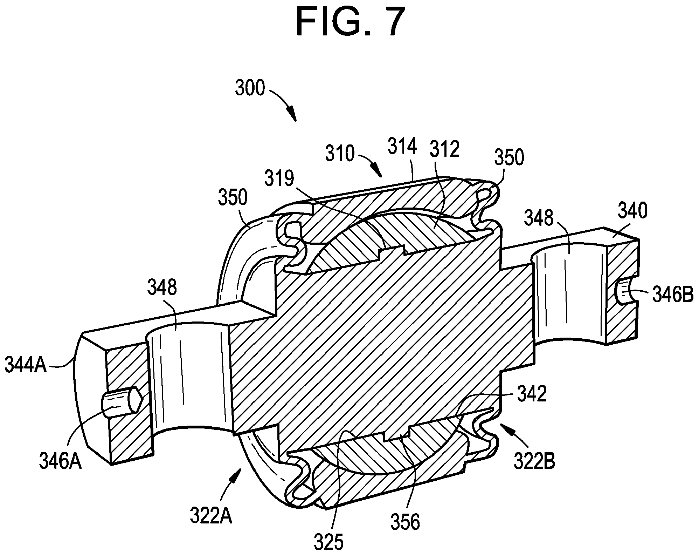

As shown in FIG. 7, an embodiment of a spherical plain bearing of the present invention located on a shaft is generally designated by the reference number 300 and is hereinafter referred to as "bearing assembly 300." Bearing assembly 300 comprises a shaft 340 extending through a bearing 310 which in turn comprises an outer race 314 positioned on a ball 312. Upon installation of the outer race 314 on the ball 312, an optional seal boot 350 may be attached to the outer race 314 and the shaft 340 at one or both of a first edge 322A and a second edge 322B of the outer race 314. An annular inner surface 325 of ball 312 may define a channel or slot 319 extending radially outwardly from an axially central portion of the annular inner surface 325 of the ball 312. The slot 319 receives a corresponding ridge 356 extending radially outwardly from the outer surface 342 of the shaft 340. Engagement of the ridge 356 of the shaft 340 and the slot 319 of the ball 312 provides another embodiment for insuring that axial sliding motion does not occur between the ball 312 and the shaft 340. While the slot 319 is shown and described as being located at an axially central portion of the annular inner surface 325 of the ball 312, the present invention is not limited in this regard as the slot 319 may be located at any point on the annular inner surface 325 of the ball 312 that engages the outer surface 342 of the shaft 340, and a corresponding ridge 356 defined therein, without departing from the broader aspects of the invention. While the slot 319 is shown and described as extending radially outwardly from the annular inner surface 325 of the ball 312, and the ridge 356 is shown and described as extending radially outwardly from the outer surface 342 of the shaft 340, the present invention is not limited in this regard as the slot 319 may extend radially inwardly from the outer surface 342 of the shaft 340 and the corresponding ridge 356 may extend radially inwardly from the annular inner surface 325 of the ball 312 without departing from the broader aspects of the invention.

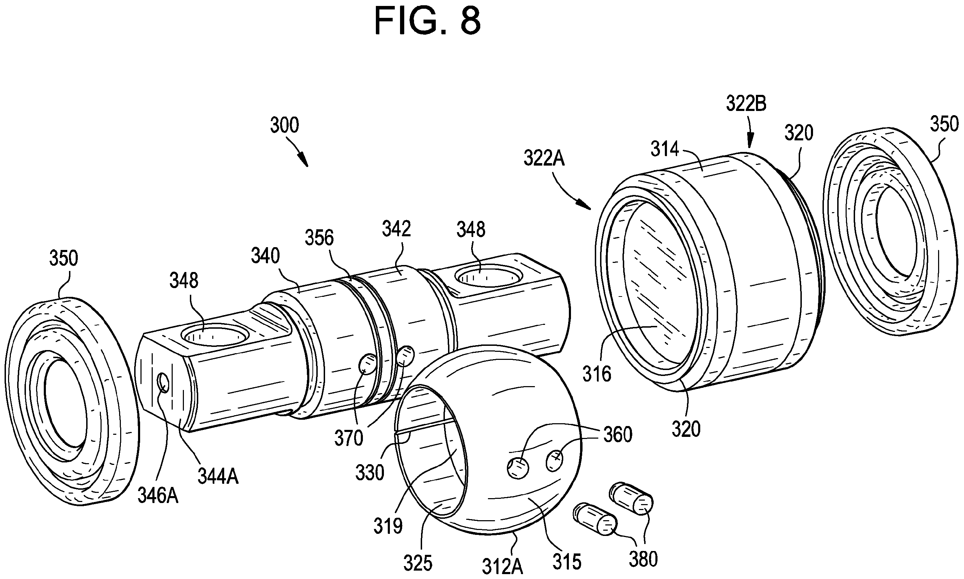

As shown in FIG. 8, the ball comprises an inner member such as a spring ball or a radial spring ball 312A positioned in the outer race 314. The outer race 314 is a ring that defines an inner engagement surface 316 contoured to a shape complementary to an outer surface 315 of the ball 312A. A slit 330 extends through the axial length of the ball 312A. The outer race 314 may include a lip 320 extending circumferentially therearound at a first edge 322A and a second edge 322B.

As further shown in FIG. 8, shaft 340 extends through the ball 312A similar to the shaft 40 described above with reference to the bearing assembly 100. Upon installation of the outer race 314 on the ball 312A, a seal boot 350 can be attached to the outer race 314 and the shaft 340 at one or both of the first edge 322A and the second edge 322B of the outer race 314. The annular inner surface 325 of ball 312A may define a channel or slot 319 extending radially outwardly therefrom. The slot 319 receives a corresponding ridge 356 extending radially outwardly from the outer surface 342 of the shaft 340. Engagement of the ridge 356 of the shaft 340 and the slot 319 of the ball 312A provides another embodiment for insuring that axial sliding motion does not occur between the ball 312A and the shaft 340.

The ball 312A also may define an aperture 360, and preferably two apertures 360 as shown in FIG. 8, extending radially therethrough. An aperture 370, and preferably two apertures 370 as shown in FIG. 8, are defined in the shaft 340 and extend at least partway radially inwardly from the outer surface 342 of the shaft 340. Each corresponding pair of one of the apertures 360 and one of the apertures 370 is configured to receive a shaft or pin 380 therein to maintain the position of the ball 312A in relation to the shaft 340 extending therethrough. While the apertures 370 have been shown and described as extending partway radially inwardly from the outer surface 342 of the shaft 340, the present invention is not limited in this regard as the apertures 370 may extend radially inwardly through the shaft 340 without departing from the broader aspects of the invention. Engagement of the pins 380 in each corresponding pair of one of the apertures 360 and one of the apertures 370 provides another embodiment for insuring that axial sliding motion does not occur between the ball 312A and the shaft 340. While one or two apertures 360 and one or two apertures 370 are shown and described as being configured to receive a respective shaft or pin 380 therein, the present invention is not limited in this regard as more than two apertures 360 and 370 may be configured to receive a respective shaft or pin 380 therein without departing from the broader aspects of the invention.

Testing of bearing 10 was performed on a duty cycle bench.

### Example:

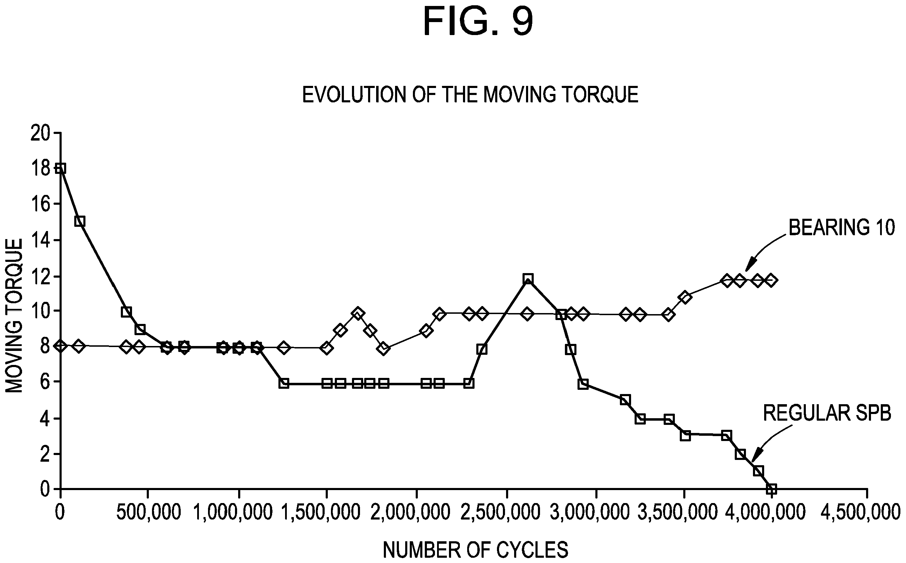

The bearing 10 was subjected to a pressure of 18 mega pascals (MPa) and both rotational and swiveling or tilting motion. The rotational motion involved axially rotating the ball 12, +/- 10 degrees relative to the outer race 14. The swiveling motion involved radially swiveling the ball +/- 3 degrees relative to the outer race 14. The stability of the bearing 10 after 4,000,000 cycles of oscillations (each oscillation comprising both rotational and swiveling motion) at a frequency of 1.7 Hz under constant load was assessed. As is shown in FIG. 9, after the 4,000,000 cycles of oscillations the torque of the bearing 10 was determined to remain stable relative to a typical spherical plain bearing, which showed a decrease in torque to a value close to zero.

Although this invention has been shown and described with respect to the detailed embodiments thereof, it will be understood by those skilled in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. A spherical plain bearing assembly (300), comprising:
a flexible ball comprising a radial spring ball (312A), the flexible ball having a spherical outer surface (315), an annular inner surface (325), a first diameter, and a bore extending therethrough, the inner surface (325) defining a slot (319) therein extending radially outwardly, the flexible ball defining a slit (330) extending axially therethrough such that the flexible ball (312A) is resiliently expandable in a radial direction defining a second diameter which is greater than the first diameter, the flexible ball further defining at least one first aperture (360) extending radially therethrough;
an outer race (314) having an inner engagement surface (316) contoured to a shape complementary to the spherical outer surface (315) of the flexible ball (312A), the flexible ball being positioned within the outer race such that the spherical outer surface (315) of the flexible ball slidably and rotatably engages the inner engagement surface (316) of the outer race, wherein, upon sliding, rotating or tilting motion of the spherical outer surface (315) of the flexible ball relative to the inner engagement surface (316) of the outer race, a substantially constant torque is maintained in the spherical plain bearing;
a shaft (340) having an outer surface defining a ridge (356) extending radially outwardly that is received within the slot (319) in the inner surface (325) of the flexible ball, the shaft further defining at least one second aperture (370) extending at least partway radially inwardly from the outer surface (342) of the shaft, the shaft extending through the bore of the flexible ball (312A) and being fixedly secured to the flexible ball to prevent axial sliding and rotating motion of the inner surface of the flexible ball relative to the outer surface of the shaft; and
a pin (380) respectively received in the at least one first aperture (360) and the at least one second aperture (370) to maintain the position of the flexible ball (312A) in relation to the shaft (340) extending therethrough.

2. The spherical plain bearing assembly of claim 1 further comprising:
at least one seal boot (350) attached to the outer race (314) and the shaft (340), the seal boot comprising a spring such that the seal boot is compressibly engageable with a lip on the outer race and a groove located in the shaft.

## Patentansprüche

1. Sphärische Gleitlager-Gruppe (300), umfassend:
eine flexible Kugel, umfassend einen radialen Federball (312A), wobei der flexible Ball eine sphärische äußere Fläche (315), eine ringförmige innere Fläche (325), einen ersten Durchmesser und eine Bohrung hat, die sich dadurch erstreckt, wobei die innere Fläche (325) einen Schlitz (319) definiert, der sich darin radial auswärts erstreckt, wobei der flexible Ball einen Spalt (330) definiert, der sich axial dadurch derart erstreckt, dass der flexible Ball (312A) elastisch ausdehnbar in einer radialen Richtung ist, die einen zweiten Durchmesser definiert, der größer ist als der erste Durchmesser, wobei der flexible Ball weiterhin wenigstens eine erste Öffnung (360) definiert, die sich radial dadurch erstreckt;
eine äußere Bahn (314), die eine innere Eingreiffläche (316) hat, die zu einer Form profiliert ist, die zu der sphärischen äußeren Fläche (315) des flexiblen Balls (312A) komplementär ist, wobei der flexible Ball innerhalb der äußeren Bahn derart positioniert ist, dass die sphärische äußere Fläche (315) des flexiblen Federfalls gleitbar und rotierbar in die innere Eingreiffläche (316) der äußeren Bahn eingreift, wobei, bei einer Gleit-, Rotations- oder Kippbewegung der sphärischen äußeren Fläche (315) der flexible Ball relativ zur inneren Eingreiffläche (316) der äußeren Bahn ein im Wesentlichen konstantes Drehmoment in dem sphärischen Gleitlager aufrechterhalten wird;
Schaft (340) mit einer äußeren Fläche, die eine Rippe (356) definiert, die sich radial auswärts erstreckt, die innerhalb des Schlitzes (319) in der inneren Fläche (325) des flexiblen Balls aufgenommen ist, wobei der Schaft weiterhin wenigstens eine zweite Öffnung (370) definiert, die sich wenigstens auf halbem Weg radial einwärts von der äußeren Fläche (342) des Schaftes erstreckt, wobei sich der Schaft durch die Bohrung des flexiblen Balls (312A) erstreckt und fest an dem flexiblen Ball gesichert ist, um ein axiales Gleiten und eine Rotationsbewegung der inneren Fläche des flexiblen Balls relativ zur äußeren Fläche des Schaftes zu verhindern; und
Stift (380), der jeweils in der wenigstens einen ersten Öffnung (360) und an der wenigstens einen zweiten Öffnung (370) aufgenommen ist, um die Position des flexiblen Balls (312A) im Verhältnis zu dem sich dadurch erstreckenden Schaft (340) aufrechtzuerhalten.

2. Sphärische Gleitlager-Gruppe gemäß Anspruch 1, umfassend:
wenigstens eine Dichtungsmanschette (350), die an der äußeren Bahn (314) und dem Schaft (340) befestigt ist, wobei die Dichtungsmanschette eine Feder derart umfasst, dass die Dichtungsmanschette komprimierbar in einen Schnabel an der äußeren Bahn und eine sich in dem Schaft befindende Nut eingreifbar ist.

## Revendications

1. Ensemble palier lisse sphérique (300), comprenant :
une bille flexible comprenant une bille à ressort radial (312A), la bille flexible ayant une surface extérieure sphérique (315), une surface intérieure annulaire (325), un premier diamètre et un trou s'étendant à travers celle-ci, la surface intérieure (325) définissant une encoche (319) dans celle-ci s'étendant radialement vers l'extérieur, la bille flexible définissant une fente (330) s'étendant axialement à travers celle-ci de telle sorte que la bille flexible (312A) peut s'étendre élastiquement dans une direction radiale définissant un second diamètre qui est supérieur au premier diamètre, la bille flexible définissant en outre au moins une première ouverture (360) s'étendant radialement à travers celle-ci ;
un chemin de roulement extérieur (314) ayant une surface d'engagement intérieure (316) profilée selon une forme complémentaire à la surface extérieure sphérique (315) de la bille flexible (312A), la bille flexible étant positionnée dans le chemin de roulement extérieur de telle sorte que la surface extérieure sphérique (315) de la bille flexible s'engage de manière coulissante et rotative avec la surface d'engagement intérieure (316) du chemin de roulement extérieur, dans lequel, lors du mouvement de coulissement, de rotation ou d'inclinaison de la surface extérieure sphérique (315) de la bille flexible par rapport à la surface d'engagement intérieure (316) du chemin de roulement extérieur, un couple sensiblement constant est maintenu dans le palier lisse sphérique ;
un arbre (340) ayant une surface extérieure définissant une arête (356) s'étendant radialement vers l'extérieur qui est reçue dans l'encoche (319) de la surface intérieure (325) de la bille flexible, l'arbre définissant en outre au moins une seconde ouverture (370) s'étendant au moins en partie radialement vers l'intérieur depuis la surface extérieure (342) de l'arbre, l'arbre s'étendant à travers le trou de la bille flexible (312A) et étant fixé à demeure à la bille flexible pour empêcher le mouvement de coulissement axial et de rotation de la surface intérieure de la bille flexible par rapport à la surface extérieure de l'arbre ; et
une cheville (380) reçue respectivement dans l'au moins une première ouverture (360) et l'au moins une seconde ouverture (370) pour maintenir la position de la bille flexible (312A) par rapport à l'arbre (340) s'étendant à travers celle-ci.

2. Ensemble palier lisse sphérique selon la revendication 1, comprenant en outre :
au moins un soufflet d'étanchéité (350) attaché au chemin de roulement extérieur (314) et à l'arbre (340), le soufflet d'étanchéité comprenant un ressort de telle sorte que le soufflet d'étanchéité peut s'engager de manière compressible avec une lèvre sur le chemin de roulement extérieur et une rainure située dans l'arbre.
